# EUROPEAN PATENT APPLICATION

(11) **EP 1 734 742 A1**
(43) Date of publication of application: **20.12.2006**
(21) Application number: 05300476.8
(22) Date of filing: 13.06.2005
(51) Int. Cl.: H04N 5/225, F16M 11/00

(54) **Camera support**

(71) Applicant: Thomson Licensing, 92100 Boulogne-Billancourt (FR)
(72) Inventor: Boneschanscher, Machiel, 5111 VT, Baarle-Nassau (NL); Moerdijk, Victor, 5627 JW, Eindhoven (NL); Dam, Jeffrey, 4701 EA, Roosendaal (NL)
(74) Representative: Arnold, Klaus-Peter

(57) **Abstract**

A camera support comprises a baseplate (1) on which first (5, 11) and second (19, 20) engaging means are formed for releasably engaging first (16) and second (21) portions of a camera body displaced along the baseplate (1) in an engaging direction. The first engaging means (5, 11) defines an abutment position for the first portion of the camera body, and the second engaging means (19, 20) defines a space (38) between two sidewalls for slidably receiving a web (23) of second portion (21) of the camera body, and wherein one of said sidewalls is displaceable towards the other and is coupled to a trigger (14) of the first engaging means so as to clamp the web (23) between the sidewalls when the trigger (14) is operated by the first portion (16) reaching the abutment position.

## Description

The present invention relates to a camera support for releasably mounting a camera. A known type of support in the field of television cameras is a so-called superexpander, which may be regarded as a kind of frame for mounting on a tripod or the like, and which bears a lens, and to which different types of camera bodies may be releasably connected in order to cooperate with the lens.

Conventionally, such a superexpander has a baseplate on which first and second engaging means are formed for releasably engaging front and rear portions of a camera body, and the camera body is displaceable from rear to front on the baseplate in order to be connected. The first engaging means (or front engaging means)is formed of two wedges, which define the sides of a tapered swallowtail groove, and which converge in the forward direction. The camera body has a tapered wedge of swallowtail cross section which may be pushed into said groove until the sides of the camera wedge touch those of the baseplate. In this way, an abutment position for the camera body is defined, beyond which it cannot move forward, and where it cannot move laterally or vertically, either. The second or rear engaging means are formed by a platelet which is held by a stem at a distance from the baseplate, and complementary engaging means of the camera comprise webs which engage between the baseplate and the platelet when the camera body is moved forward to its abutment position. There must be some play between the platelet and the webs, in order to ensure that they can be freely engaged and disengaged. However, this play implies that there is some residual mobility in the rear portion of the camera body, even if the front portion thereof is in the abutment position. If the camera body can move with respect to the lens, so will the image projected by the lens with respect to the light sensitive surface of the camera body. In order to avoid this, a play-free fixture must be provided for the rear portion of the camera, too. Of course, additional tools might be provided for fixing the rear portion of the camera to the baseplate without play, but operating these tools is tedious, and there is a risk that the camera man forgets to use them.

The object of the invention is to provide a camera support which will lock a camera body in place without play automatically when it is moved into its intended mounting position.

This object is achieved by a camera support comprising a baseplate on which first and second engaging means are formed for releasably engaging first and second portions of a camera body displaced along the baseplate in an engaging direction, wherein the first engaging means defines an abutment position for the first region of the camera, and the second engaging means defines a space between two sidewalls for slidably receiving a web of the camera, and wherein one of said sidewalls is displaceable towards the other and is coupled to a trigger of the first engaging means so as to clamp the web between the sidewalls when the trigger is operated by the first region reaching the abutment position.

The camera support preferably comprises a first spring for urging the sidewalls away from each other, so that the web of the camera may be freely introduced into the space between them as long as the trigger is not operated.

One of said sidewalls may be formed by a flat outside surface of said baseplate, and the other sidewall may be formed by a locking plate which is held above said flat surface by a stem extending through a bore of said flat surface.

In order to drive the clamping movement, a wedge may be located between a pressing surface of said stem and an inside surface of said baseplate, so that when the wedge is thrust farther into the space between the pressing surface and the inside surface of the baseplate, the locking plate is pulled towards the outside surface of the baseplate.

In order to apply a well balanced pulling force to the stem, the stem may extend through a slot of the wedge, and the pressing surface may be formed on a plate that extends sideways from said stem.

A second spring may be provided for urging the wedge towards a position in which the stem is withdrawn into the baseplate, so that no external driving force is required for withdrawing the stem.

For coupling the wedge to the trigger of the first engaging means, the wedge is preferably arranged to be displaceable transversally with respect to the displacement direction of the camera body, and the trigger releasably engages a spring-loaded latch, which is also displaceable transversally with respect to the displacement direction, and the wedge is coupled to the latch by a two-armed lever extending in the displacement direction.

Further features and advantages of the invention will become apparent from the subsequent description of embodiments thereof, referring to the appended drawings.
- Fig. 1: is a perspective view of a camera support according to the invention and of complementary engaging means of the camera for cooperating with the engaging means of the camera support;

- Fig. 2: is a bottom view of the support of Fig. 1;
- Fig. 3: is a cross section of the support taken along line III-III of Fig. 2;
- Fig. 4: is a bottom view of the mounting plate in unlocked configuration; and
- Fig. 5: is a cross section along line V-V of Fig. 4.

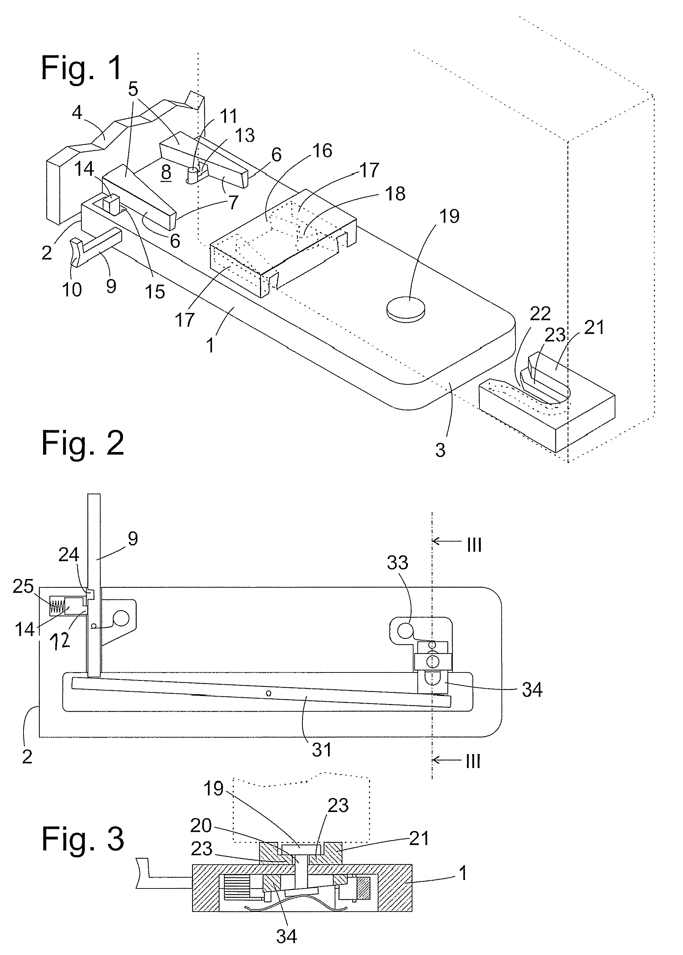

The general configuration of the camera support will be explained referring to Fig. 1. Like a conventional superexpander, the support comprises a baseplate 1 and a vertical wall 4 which is faced by a front end 2 of baseplate 1 and to an upper portion of which a lens, not shown, is mounted. In the Fig.1, only a lower portion of wall 4 is depicted. The baseplate 1 is a flat slab made of aluminum or the like.

Near the front end 2, two wedges 5 are formed on the baseplate 1. The wedges 5 have vertical outer sides 6 extending in a longitudinal direction of the baseplate 1 and inner sides 7 which face each other and converge in upward and frontward directions, so as to define a wide tapered groove 8 having a swallow-tail cross section.

Underneath the wedges 5, a latch 9 is slideably received in a transversal slot of the baseplate 1. At a remote end of the latch 9, a concave surface 10 is formed, which is easily pressed with a finger, in order to push the latch 9 into the baseplate 1. The latch 9 is connected to a cylindrical pin 11 which protrudes through an elongated hole 13 at the bottom of tapered groove 8. The elongated hole 13 extends into one of the wedges 5, so that when the latch 9 is pressed, the pin 11 moves out of the groove 8 and disappears in the opening of the wedge.

Adjacent to the outer side 6 of one of the wedges 5, a trigger pawl 14 is mounted in a hole 15 of the baseplate 1. The trigger pawl 14 is displaceable in the longitudinal direction of the baseplate 1.

Near the centre of the baseplate 1, a cuboid block 16 is shown, which forms engaging means of the camera body. The camera body is shown in phantom in the figure in order to illustrate its position with respect to the block 16. At the bottom side of the block 16, two tapered grooves 17 are formed, the shape of which matches the wedges 5 of the baseplate. Since the grooves 17 have wide openings at the side of the block 16 which faces the wedges 5, it is easy to make the wedges 5 engage the grooves 17 when the camera body is pushed towards the wall 4 in order to prepare for coupling it to the lens. The camera body can be pushed forward until an abutment position is reached in which the inner sides of the groove 17 touch the inner sides 7 of the wedges 5. When this happens, a notch 18 formed in an inner side of one of the grooves 17 is aligned with the elongated hole 13, so that pin 11 can engage it and come into contact with a front wall of the notch 18, thereby preventing a rearward movement of the block 16. The position of block 16 is thus defined without any play.

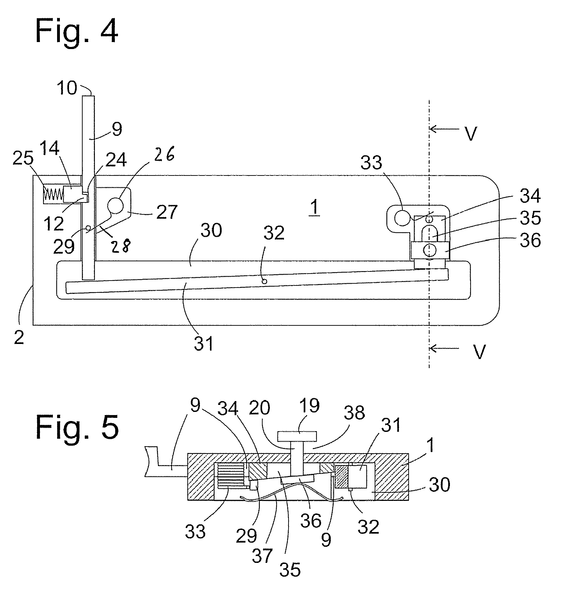

Near the rear end 3 of the baseplate 1, a circular locking plate 19 is held spaced from the upper side of the baseplate 1 by a cylindrical stem 20 (see e. g. Fig. 5) which, in the view of Fig. 1, is concealed completely below the locking plate 19.

The camera body has a shoe plate 21 fixed to its rear bottom portion, in which an undercut groove 22 is formed. In its upper portion, the groove 22 is wide enough to receive the locking plate 19, whereas in a lower portion thereof, webs 23 protrude from the sides of the groove towards the centre in order to engage between the locking plate 19 and the surface of the baseplate 1 at both sides of the stem 20.

In the configuration of the support shown in Fig. 1, a camera body would be locked to the support, if appropriately placed with its block 16 engaging the groove 8, the pin 11 engaging the notch 18 and the locking plate 19 engaging the groove 22 of shoe plate 21.

In order to understand the process of locking the camera body to the support, reference will now be made to Fig. 4 and 5, which show a bottom view of the baseplate 1 and a cross section of it in a non-locking configuration. In this configuration, the latch 9 is pressed into the baseplate 1, so that pin 11 is hidden within the wedge 5. A cog 12, which is part of trigger pawl 14, engages a notch 24 of latch 9. The cog 12 is held pressed into the notch 24 by a compressed helical spring 25. Another helical spring 26 is mounted in a cutout 27 and is under a torsion load, so that an end branch 28 of spring 26 applies a force to a catch 29 of latch 9 which tends to push latch 9 out of the baseplate
1. The latch 9, being blocked by cog 12, cannot yield to this force.

In a longitudinal cutout 30 of the baseplate 1, a two-armed lever 31 is rotatably held on a shaft 32. A wedge 34 is pressed against one end of the lever 31 by a third helical spring 33, whereby the other end of the lever 31 is pressed against the inner end of latch 9. The wedge 34 has a longitudinal slot 35 formed in it, through which the stem 20 extends. A pressing plate 36 extending across the wedge 34 is fixed to an end of the stem 20. A leaf spring 37, which is not shown in Fig. 4 for the sake of clarity, but in Fig. 5 only, urges the plate 36 against the wedge 34, so that the wedge 34 is held without play between the plate 36 and an inner surface of baseplate 1. In the configuration of Fig. 5, the space 38 between the upper surface of baseplate 1 and the bottom side of locking plate 19 is wide enough for the webs 23 of shoe plate 21 to engage in it easily.

In the process of pushing the camera body forward from the position shown in Fig. 1 to the position in which it is to be locked, the block 16 hits trigger pawl 14 and pushes it towards front end 2, whereby spring 25 is compressed and cog 12 is removed from notch 24. Now, the latch 9 can yield to the force of spring 26 and move outward. The lever 31 is now free to rotate about shaft 32, so that it yields to the pressure of the wedge 34, the wedge 34 is moved downward in the perspective of Fig. 4 or to the right in the perspective of Fig. 5, thus pulling locking plate 19 towards baseplate 1.

The resulting configuration can be seen in Fig. 2 and 3. The wedge 34 yields to the force of spring 33, until the locking plate 19 is drawn so close to the baseplate 1 that the webs 23 of shoe plate 21 are clamped between baseplate 1 and locking plate 19. Since the slope of the wedge 34 is small - the thickness difference between its thick and narrow ends may be less than 0.5 mm, whereas the distance between its two positions in the configurations of Fig. 2 and 4 may be several millimetres the wedge 34 cannot slide sideways if a pulling force is applied to the locking plate 19, so that the shoe plate 21 is held firmly and without play.

In order to release the camera body again, it is sufficient to press the latch 9 into the baseplate 1, so that pin 11 moves out of groove 8 and into its wedge 5, and the wedge 34 is pushed back by lever 13, allowing the locking plate 19 to be raised by leaf spring 37. The camera body is thus unlocked and can be drawn backwards. Due to the cog 12 being pressed into notch 24 by spring 25, the latch 9 is held in this position until another camera body is mounted and presses trigger pawl 14 forward again.

## Claims

1. A camera support comprising a baseplate (1) on which first (5, 11) and second (19, 20) engaging means are formed for releasably engaging first (16) and second (21) portions of a camera body displaced along the baseplate (1) in an engaging direction, wherein the first engaging means (5, 11) defines an abutment position for the first portion of the camera body, and the second engaging means (19, 20) defines a space (38) between two sidewalls for slidably receiving a web (23) of the camera body, and wherein one of said sidewalls is displaceable towards the other and is coupled to a trigger (14) of the first engaging means so as to clamp the web (23) between the sidewalls when the trigger (14) is operated by the first portion (16) reaching the abutment position.

2. The camera support of claim 1, comprising a first spring (37) for urging the sidewalls away from each other.

3. The camera support of claim 1 or 2, **wherein** a flat outside surface of said baseplate (1) forms one of said sidewalls, and the other sidewall is formed by a locking plate (19) which is held above said flat surface by a stem (20) extending through a bore of said flat surface.

4. The camera support of claim 3, **wherein** the locking plate (19) extends from said stem (20) in opposite directions perpendicular to the sliding direction.

5. The camera support of claim 3 or 4, **wherein** a wedge (34) is located between a pressing surface (36) of said stem (20) and an inside surface of said baseplate (1).

6. The camera support of claim 5, **wherein** the stem (20) extends through a slot (35) of the wedge (34) and the pressing surface is formed on a plate (36) that extends sideways from said stem (20).

7. The camera support of claim 5 or 6, **wherein** the wedge (34) is urged by a second spring (33) towards a position in which the stem (20) is withdrawn into the baseplate (1).

8. The camera support of one of claims 5 to 7, **wherein** the wedge (34) is displaceable transversally with respect to the displacement direction of the camera body, and the trigger (14) releasably engages a spring-loaded latch (9) which is displaceable transversally with respect to said displacement direction, and the wedge (34) is coupled to the latch (9) by a two-armed lever (31) extending in said displacement direction.
